# EUROPEAN PATENT APPLICATION

(11) **EP 3 871 859 A1**
(43) Date of publication of application: **01.09.2021**
(21) Application number: 20315022.2
(22) Date of filing: 26.02.2020
(51) Int. Cl.: B29C 64/165, B33Y 10/00, B33Y 40/20

(54) **THREE-DIMENSIONAL PRINTING**

(71) Applicant: Hewlett-Packard Development Company, L.P., Spring, TX 77389 (US)
(72) Inventor: Zhao, Lihua, Palo Alto, CA 94304-110 (US); Thonet, Agnieszka, 1217 Meyrin (CH); Hartman, Aja, Palo Alto, CA 94304-110 (US); Olubummo, Paul, Palo Alto, CA 94304-110 (US); Rougeaux, Isabelle, 38054 Grenoble Cedex 9 (FR); Blanchot, Olivier, 38054 Grenoble Cedex 9 (FR); Piluso, Pierre, 38054 Grenoble Cedex 9 (FR); Delmas, Jérôme, 38054 Grenoble Cedex 9 (FR)
(74) Representative: Casalonga

(57) **Abstract**

The present disclosure relates to a method of manufacturing a 3D printed object (1006). The method comprises selectively applying a fusing agent (810) onto powder bed material (804); and exposing at least part of the powder bed material (804) to radiation to fuse at least part of the powder bed material (804) to form a layer of the 3D printed object (1006). The fusing agent (810) and/or a detailing agent is selectively applied to the powder bed material (804) in a predetermined arrangement to form a porous region in the 3D printed object. The 3D printed object (1006) is then treated with a modifying agent, such that the modifying agent at least partially penetrates the porous region of the 3D printed object (1006).

## Description

### BACKGROUND

Three-dimensional (3D) printing is an additive printing process used to make three-dimensional objects from a digital model. Some 3D printing techniques may be considered additive processes because they involve the application of successive layers of material.

### BRIEF DESCRIPTION OF THE DRAWING

Features of examples of the present disclosure will become apparent by reference to the following detailed description and drawings, in which like reference numerals correspond to similar, though perhaps not identical, components. For the sake of brevity, reference numerals or features having a previously described function may or may not be described in connection with other drawings in which they appear.
FIG. 1 is an example reaction mechanism of an epoxide group and an amine group to illustrate an example crosslinking reaction;
FIGS. 2 to 4 is a schematic view of an example 3D printing system that can be used in an example method of the present disclosure;
FIGS. 5 to 9 are schematic drawings of examples of structures that can be printed using examples of the methods of the present disclosure; and
FIG. 10 shows the results of Example 2.

### DETAILED DESCRIPTION

**The** present disclosure relates to a method of manufacturing a 3D printed object. The method comprises selectively applying a fusing agent onto powder bed material; and exposing at least part of the powder bed material to radiation to fuse at least part of the powder bed material to form a layer of the 3D printed object. The fusing agent and/or a detailing agent is selectively applied to the powder bed material in a predetermined arrangement to form a porous region in the 3D printed object. The 3D printed object is then treated with a modifying agent, such that the modifying agent at least partially penetrates the porous region of the 3D printed object.

In some examples, the porous region can receive, localize and/or interact with the modifying agent, such that it becomes incorporated into the 3D printed object at desired locations within the 3D printed object.

By controlling the selective application of the fusing agent and/or detailing agent, it may be possible to control e.g. the size, shape, configuration and location of the porous region at the voxel-level. This "digital" level of control can allow the modifying agent to be incorporated into the structure of the 3D printed object with a degree of precision. Accordingly, although the modifying agent is applied to the 3D printed object after the object has been printed (e.g. by bulk treatment of the 3D printed object), the modifying agent can be introduced with a level of precision afforded by the selective application of the fusing agent and/or detailing onto the powder bed material as the object is manufactured layer-by-layer. In examples where a modifying agent may not be as readily dispensed using a printhead nozzle, the modifying agent can still be incorporated into a 3D printed object precision. In some examples, it may also be possible to incorporate modifying agents into the 3D printed object with precision, where hardware constraints limit the number of agents that can be applied during the printing process.

The porous region may be any region that has a solid volume fraction of less than about 1. The solid volume fraction of the porous region may be less than about 0.99, for example, less than about 0.98, less than about 0.97, less than about 0.95, less than about 0.93 or less than about 0.90. In some examples, the solid volume fraction may be more than about 0.5, for example, more than about 0.6, more than about 0.7 or more than about 0.75. In some examples, the solid volume fraction may be about 0.5 to about 0.99, for instance, about 0.6 to about 0.98, about 0.7 to about 0.97, or about 0.75 to about 0.95.

The porous region may comprise a void volume that forms the internal structure of the porous region. The void volume may be provided in any suitable shape and/or configuration. For example, the void volume may be provided in the form of channel(s), cell(s), pore(s) or chamber(s). The void(s) may be suitable for receiving and/or localizing the modifying agent within the 3D printed object. The void(s) may also be suitable for guiding the flow of modifying agent into particular sites within the 3D printed object. In some examples, the porous region comprises at least one channel. In some examples, the channel may provide a fluid pathway through a part of the 3D printed object. In other examples, the porous region comprises pores.

In some examples, the void volume of the porous region may be reflected by the density of the porous region. For example, if the void volume of a part is zero (and the solid fraction is 1), then the density of the part may correspond to the density of the powder bed material used to form the part. The latter may be the density of fully fused powder bed material. However, where the part has a void volume that is greater than zero (i.e. the solid fraction is less than 1), then the density of the part may correspond to less than about 100% of the density of the material used to form the part in the fully fused state. Similarly, where the void volume of a porous region of the part is greater than zero (and the solid fraction is less than 1), then the density of the porous region of the part corresponds to less than about 100% of the density of the material used to form that region.

In some examples, the density of the porous region may correspond to less than about 99%, less than about 98%, less than about 97%, less than about 95%, less than about 94% of the density of the material used to form that region. For instance, in examples where PA-11 is used as the powder bed material, the porous region of the 3D object may have a density that is less than the density of PA-11, namely 1.03 g/cm³. In some examples where PA-11 is used as the powder bed material, the porous region of the 3D object may have a density that is less than about 1.00 g/cm³, less than about 0.99 g/cm³, less than about 0.98 g/cm³, less than about 0.97 g/cm³ or less than 0.96 g/cm³. In some examples where PA-11 is used as the powder bed material, the density of the porous region may be more than about 0.80 g/cm³, more than about 0.85 g/cm³, more than about 0.88 g/cm³.

In some examples, the porous region may comprise a void structure that is designed for localizing the modifying agent within the 3D printed object. The void structure may be tailored depending on e.g. the nature and amount of the modifying agent to be incorporated, the application of the 3D object and the treatment used to cause penetration of the modifying agent into the porous region. For example, where a modifying agent is required at a particular location within 3D printed object, the 3D object may be printed with a porous region in the relevant portion of the 3D printed object. If a relatively large amount of modifier is required, the porous region may have a void structure that presents a relatively high surface area for localizing the relatively high amount of the modifying agent within the 3D printed object. The void structure may comprise regularly spaced and/or sized voids. Alternatively, the void structure may comprise irregularly spaced and/or sized voids. The voids may contain unfused powder bed material, for example, loosely packed unfused powder bed material.

The porous region may be present at the surface of the 3D printed object. Alternatively, the porous region may be present in the interior of the 3D printed object, or may extend from the surface of the 3D printed object into its interior. In examples where the porous region is present at the surface of the 3D printed object, the porous region may extend at least about 200 microns or at least about 300 microns, beneath the outer surface of the 3D printed object. In some examples where the porous region is present at the surface of the 3D printed object, the porous region may extend at least about at least about 500 microns, at least about 700 microns, or at least about 1 mm beneath the surface of the object. By ensuring that the porous region extends partially or is present beneath the surface of the 3D printed object, the modifying agent to be incorporated into the body of the 3D printed object, rather than being localized solely on the surface.

In some examples, the porous region comprises pores. The porous region may comprise an open pore or closed pore structure. In some examples, the pores may be interconnected. Interconnected pores can facilitate flow of the modifying agent through the porous network of the porous region. In some examples, the porous region may provide a fluid pathway through which the modifying agent can flow. In some examples, the pores may provide tortuous pathways through which the modifying agent can flow.

The porous region may have a pore volume of at least about 3%, for example, at least about 4% or at least about 5%. The porous region may have a pore volume of less than about 40%, for example, less than about 30% or less than about 25%. In some examples, the porous region may have a pore volume of from about 3% to about 40%, for example, about 4% to about 30% or from about 5% to about 25%.

Where the porous region comprises pores, the pores may have an average pore size of about 1 to about 500 microns, for example, about 10 to about 200 microns.

In some examples, the porous region comprises pores formed from interstices between partially fused and/or unfused particles of powder bed material. Accordingly, rather than being completely fused to form a solid layer, there may be gaps or interstices between partially fused or unfused particles that provide the structure with porosity. In some examples, the porous region may comprise pores that contain unfused powder bed material.

In some examples, the amount of fusing agent and/or a detailing agent that is selectively applied to the powder bed material is controlled to determine the extent of fusing of the powder bed material that forms the porous region.

The fusing agent and/or detailing agent may be selectively applied to tailor e.g. the location and configuration porous region. The location and configuration of the porous region may be tailored depending on, for example, the location, amount and nature of the modifying agent that is to be incorporated in the 3D printed object. The configuration of the porous region may also be tailored depending on the method used to treat the 3D printed object with the modifying agent.

In some examples, the fusing agent and/or a detailing agent is selectively applied to the powder bed material to provide a porosity gradient across the porous region. For example, the porosity of the porous region may be vary from the exterior to the interior of the 3D printed object. Porosity may increase or decrease towards the interior. In some examples, the change in porosity may be gradual. In other examples, the porosity may change in a stepwise fashion. A porosity gradient may be used to alter or control the concentration of modifying agent that is incorporated into the 3D printed object.

In some examples, a plurality of porous regions may be provided. The porous regions may have varying degrees of porosity. Where a plurality of porous regions are provided, the porous regions may be provided at different locations within the 3D printed object.

In some examples, at least part of the porous region is exposed to the surface of the 3D printed object that is treated with the modifying agent. This can allow the modifying agent direct access to the porous region.

In some examples, the porous region forms at least part of an outer layer of the 3D printed object. The porous region may also extend into the interior of the 3D printed object. In some examples, the porous region may be provided in an internal region, for instance, in a core region of the 3D printed object. In some examples, the porous region may extend through the entirety of the 3D printed object, such that the 3D printed object is porous.

Where the porous region may be present in an internal portion of the 3D printed object, it may be possible to provide access to a porous region in an internal portion of the 3D printed object by forming a passageway through the object. The passageway may be formed during the printing process, for instance, by selective application of the fusing and/or detailing agent. In some examples, the passageway may be formed post-printing, for example, by mechanical intervention (e.g. drilling, cutting). Alternatively or additionally, the 3D printed object may be formed of a material that is permeable to the modifying agent under the conditions of treatment, such that the porous region in an internal portion of the 3D printed object is accessible to the modifying agent.

In some examples, the 3D printed object may be treated with the modifying agent by dipping, physical or chemical vapor deposition, and/or supercritical fluid deposition. In some examples, the 3D printed object is treated by supercritical carbon dioxide deposition of the modifying agent into the porous region. These treatments can be performed on the ready-formed 3D printed object. An external or outer surface of the 3D printed object may be treated, such that the modifying agent penetrates or at least partially penetrates the porous region. As explained above, the porous region may be exposed to a surface of the 3D printed object that is treated with the modifying agent. Alternatively or additionally, the porous region may be accessible because an outer region of the 3D printed object is permeable to the modifying agent under the treatment conditions. Alternatively or additionally, a passageway may be made in the 3D printed object to provide or enhance accessibility of the modifying agent into the porous region.

In some examples, the modifying agent comprises a modifier that modifies the mechanical and/or chemical properties of the 3D printed object,

The modifier may modify the mechanical and/or chemical properties of the 3D printed object at selected locations at which the modifier is present. In some examples, the modifier itself may cause modification in the mechanical and/or chemical properties of the 3D printed object. Alternatively, the modifier may interact with a functional component of a further modifying agent that is present at selected locations in the 3D printed object to impart the modification in mechanical and/or chemical properties (see below). In some examples, the modifier may be selected from a fire retarder, a hardener, a filler and/or a plasticizer.

In some examples, the method further comprises applying a further modifying agent comprising a functional component to at least a portion of the powder bed material, such that the functional component of the further modifying agent is incorporated in the porous region. The further modifying agent may be applied by selectively applying (e.g. by jetting) the further modifying agent onto at least a portion of the powder bed material, such that the functional component of the further modifying agent is incorporated in the porous region. Accordingly, the further modifying agent may be applied as the 3D printed object is manufactured layer-by-layer. In some examples, the further modifying agent may be incorporated in the porous region, such that the functional component of the further modifying agent is accessible to the modifying agent introduced by the post-treatment step. In some examples, the further modifying agent may be incorporated in the porous region, such that the functional component of the further modifying agent is present in the voids (e.g. channel(s) or pores) of the porous region e.g. on the void walls.

By controlling the selective application of the further modifying agent, it may be possible to control e.g. the location and amount of the further modifying agent at the voxel-level. The further modifying agent may be selected to interact with the modifying agent that is used to treat the 3D printed object. For example, the further modifying agent may be selected to selectively bind the modifying agent when the modifying agent is subsequently applied. In some examples, therefore, the further modifying agent may be used to help locate the subsequently applied modifying agent at selected locations within the 3D printed object. In other examples, the further modifying agent may be selected to react with the modifying agent. These interactions may allow material properties of the 3D printed object to be modified at predetermined locations.

In some examples, when the 3D printed object is treated with the modifying agent, the modifying agent may at least partially penetrate the porous region and interact with the functional component of the further modifying agent. In some examples, the modifying agent comprises a modifier that at least partially penetrates the porous region of the 3D printed object and reacts (e.g. crosslinks) with the functional component of the further modifying agent.

In some examples, the functional component of the further modifying agent may comprise an epoxy or amine group, and the modifier of the modifying agent may comprise the other of an epoxy or amine group. For instance, the functional component of the further modifying agent may comprise an epoxy group and the modifier of the modifying agent may comprise an amine group. Alternatively, the functional component of the further modifying agent may comprise an amine group and the modifier of the modifying agent may comprise an epoxy group. The reaction between the functional component and the modifier may be a crosslinking reaction. In some examples, the crosslinking reaction may cause the properties of the 3D printed object to be modified in the regions where the crosslinking reaction takes place. For example, the hardness, stiffness and/or strength of the 3D printed object may increase in the regions where the crosslinking reaction takes place.

In some examples, the fusing agent and/or detailing is applied to form a porous region in a first portion of the 3D printed object, and wherein the fusing agent and/or detailing is also applied to form a solid structure in a second portion of the 3D printed object.

In some examples, the method comprises selectively applying a fusing agent and a detailing agent onto a portion of powder bed material. The fusing agent and detailing agent may be selectively applied in respective predetermined arrangements to form the porous region. In some examples, the detailing agent may be applied to portions of powder bed material prior to fusing to cool the treated portions during fusing. The detailing agent may be an agent that cools by evaporative cooling. This cooling may help to ensure that the treated portions of powder bed material remain at least partially unfused after fusing. This, in turn, may help to impart better definition to the void(s) in the porous region of the fused object.

### Fusing Agents

In the present disclosure, the method comprises selectively applying a fusing agent onto a portion of powder bed material and exposing at least part of the portion of powder bed material to radiation to fuse at least part of the powder bed material to form a layer.

The fusing agent can include a radiation absorber. The radiation absorber or pigment can absorb electromagnetic radiation and convert that radiation into heat. The fusing agent can be selectively applied to areas of the powder bed material (powder bed material) that are intended to be consolidated to become part of the 3D printed object. In the present disclosure, the fusing agent may be selectively applied to the powder bed material in a predetermined arrangement to form porous region. Porosity may be provided by altering the nature, amount and/or print density of the fusing agent to control the extent of consolidation of the powder bed particles. By ensuring that the particles are not fully consolidated or fused in a particular region, porosity can be introduced into that region.

The fusing agent can be applied, for example, by printing with a fluid or inkjet printhead. Accordingly, the fusing fluid can be applied with precision to selected areas of the powder bed material to form a layer of the 3D printed object. After applying the fusing agent, the powder bed material can be irradiated with radiant energy. The radiation absorber can absorb this energy and convert it to heat, thereby heating any powder bed material particles in contact with the radiation absorber of the fusing agent. An appropriate amount of radiant energy can be applied so that the area of the powder bed material that is printed with the fusing agent can heat up enough to bind or fuse the e.g. polymer particles. This can consolidate the particles into a layer or partially consolidate the particles to provide a degree of porosity to the structure.

The process of forming a single layer by applying fusing agent and bed of powder bed material can be repeated with additional layers of fresh powder bed material to form additional layers of the 3D printed object. This can allow the final 3D printed object to be built one layer at a time.

In the printing process, the powder bed material surrounding the 3D printed object can act as a support material for the object. When the 3D printing is complete, the object can be removed from the bed.

In examples of the present disclosure, the fusing agent may be selectively applied in a predetermined arrangement to form the porous region. The nature, amount and/or printing density of the fusing agent may be controlled to vary the extent to which the powder bed material is fused. In some examples, porosity may be created by ensuring that the powder bed material is not fully fused to form a solid layer in selected parts of the 3D printed object. As a result, porosity may be provided by interstices between unfused or partially fused particles of powder bed material.

In other examples, the fusing agent can be selectively applied in a predetermined arrangement to form channel(s) or cellular structure.

The radiation absorber of the fusing agent may be any suitable absorber. Examples of suitable absorbers include UV absorbers, infrared absorbers and near infrared absorbers. In some examples, infrared absorbers or near infrared absorbers are employed. In some examples, the infrared absorber or near infrared absorber may absorb electromagnetic radiation in the range of 700 nm to 1mm. In many cases, the infrared absorber or near infrared absorber can have a peak absorption wavelength in the range of 800 nm to 1400 nm.

In some examples, the absorber can be carbon black, tungsten bronze, molybdenum bronze, conjugated polymer, aminium dye, tetraaryldiamine dye, cyanine dye, phthalocyanine dye, dithiolene dye, metal phosphate, metal silicate or mixtures thereof.

The absorber may be a near infrared absorbing dye. Examples of absorbing dyes include aminium dyes, tetraaryldiamine dyes, cyanine dyes, pthalocyanine dyes, dithiolene dyes, and others.

In further examples, the absorber can be a near-infrared absorbing conjugated polymer such as poly(3,4-ethylenedioxythiophene)-poly(styrenesulfonate) (PEDOT:PSS), a polythiophene, poly(p-phenylene sulfide), a polyaniline, a poly(pyrrole), a poly(acetylene), poly(p-phenylene vinylene), polyparaphenylene, or combinations thereof. As used herein, "conjugated" refers to alternating double and single bonds between atoms in a molecule. Thus, "conjugated polymer" refers to a polymer that has a backbone with alternating double and single bonds.

Other examples of radiation absorbers or pigments can include phosphates having a variety of counterions such as copper, zinc, iron, magnesium, calcium, strontium, the like, and combinations thereof. Specific examples of phosphates can include M₂P₂O₇, M₄P₂O₉, M₅P₂O₁₀, M₃(PO₄)₂, M(PO₃)₂, M₂P₄O₁₂, and combinations thereof, where M represents a counterion having an oxidation state of +2, such as those listed above or a combination thereof. For example, M₂P₂O₇ can include compounds such as Cu₂P₂O₇, Cu/MgP₂O₇, Cu/ZnP₂O₇, or any other suitable combination of counterions. It is noted that the phosphates described herein are not limited to counterions having a +2 oxidation state. Other phosphate counterions can also be used to prepare other suitable radiation absorbers.

Other examples of radiation absorbers or pigments include silicates. The silicates can have the same or similar counterions as the phosphates. One non-limiting example can include M₂SiO₄, M₂Si₂O₆, and other silicates where M is a counterion having an oxidation state of +2. For example, the silicate M₂Si₂O₆ can include Mg₂Si₂O₆, Mg/CaSi₂O₆, MgCuSi₂O₆, Cu₂Si₂O₆, Cu/ZnSi₂O₆, or other suitable combination of counterions. It is noted that the silicates described herein are not limited to counterions having a +2 oxidation state. Other silicate counterions can also be used to prepare other suitable pigments.

In some examples, the absorber may comprise carbon black.

In some examples, the radiation absorber may be dissolved or dispersed in a liquid vehicle. The fusing agent may be a liquid composition comprising the radiation absorber, e.g. UV absorber, near infrared absorber or infrared absorber and a liquid carrier.

The liquid carrier can include water. In some examples, an additional co-solvent may also be present. In certain examples, a high boiling point co-solvent can be included in the fusing agent. The high boiling point co-solvent can be an organic co-solvent that boils at a temperature higher than the temperature of the bed of powder bed material during printing. In some examples, the high boiling point co-solvent can have a boiling point above 250 °C. In still further examples, the high boiling point co-solvent can be present at a concentration of at least about 1 wt %, for example, at least about 1.5 wt % of the total weight of the fusing agent. The co-solvent, where employed may be present in an amount of at most about 50 wt %, for example, at most about 40 wt %, at most about 35 wt % or at most about 30 wt %. In some examples, the co-solvent may be present in an amount of from about 1 wt% to about 40 wt% of the total weight of the fusing agent.

Classes of co-solvents that can be used can include organic co-solvents including aliphatic alcohols, aromatic alcohols, diols, glycol ethers, polyglycol ethers, caprolactams, formamides, acetamides, and long chain alcohols. Examples of such compounds include primary aliphatic alcohols, secondary aliphatic alcohols, 1,2-alcohols, 1,3-alcohols, 1,5-alcohols, ethylene glycol alkyl ethers, propylene glycol alkyl ethers, higher homologs (C₆-C₁₂) of polyethylene glycol alkyl ethers, N-alkyl caprolactams, unsubstituted caprolactams, both substituted and unsubstituted formamides, both substituted and unsubstituted acetamides, and the like. Specific examples of solvents that can be used include 2-pyrrolidinone, N-methylpyrrolidone, 2-hydroxyethyl-2-pyrrolidone, 2-methyl-1,3-propanediol, tetraethylene glycol, 1,6-hexanediol, 1,5-hexanediol and 1,5-pentanediol.

A surfactant, or combination of surfactants, can also be present in the fusing agent. Examples of surfactants include alkyl polyethylene oxides, alkyl phenyl polyethylene oxides, polyethylene oxide block copolymers, acetylenic polyethylene oxides, polyethylene oxide (di)esters, polyethylene oxide amines, protonated polyethylene oxide amines, protonated polyethylene oxide amides, dimethicone copolyols, substituted amine oxides, and the like. Other surfactants can include liponic esters such as Tergitol™ 15-S-12, Tergitol™ 15-S-7 available from Dow Chemical Company, LEG-1 and LEG-7; Triton™ X-100; Triton™ X-405 available from Dow Chemical Company; and sodium dodecylsulfate.

The amount of surfactant present in the fusing agent may range from about 0.01 wt% to about 20 wt%.

Various other additives can be employed to optimize the properties of the fusing agent for specific applications. Such additives can be present at from about 0.01 wt% to about 20 wt% of the fusing agent. Examples of these additives are those added to inhibit the growth of harmful microorganisms. These additives may be biocides, fungicides, and other microbial agents, which can be used in ink jet formulations. Examples of suitable microbial agents include NUOSEPT® (Nudex, Inc.), UCARCIDE™ (Union carbide Corp.), VANCIDE® (R.T. Vanderbilt Co.), PROXEL® (ICI America), and combinations thereof.

Sequestering agents, such as EDTA (ethylene diamine tetra acetic acid), may be included to eliminate the deleterious effects of heavy metal impurities. Buffers may also be used to control the pH of the composition. Viscosity modifiers may also be present.

The amount of radiation absorber, e.g. UV absorber, infrared absorber or near infrared absorber, in the fusing agent can vary depending on the type of absorber. In some examples, the concentration of infrared absorber or near infrared absorber in the fusing agent can be from about 0.1 wt% to about 20 wt% of the fusing agent. In one example, the concentration of absorber in the fusing ink can be from about 0.1 wt% to about 15 wt%. In another example, the concentration can be from about 0.1 wt% to about 8 wt%. In yet another example, the concentration can be from about 0.5 wt% to about 2 wt%. In a particular example, the concentration can be from about 0.5 wt% to about 1.2 wt%.

The fusing agent can have a temperature boosting capacity. In the case of a polymer powder bed material, this temperature boosting capacity may be used to increase the temperature of the polymer in the powder bed material above the melting or softening point of the polymer. As used herein, "temperature boosting capacity" refers to the ability of a fusing agent to convert electromagnetic radiation, for example, infrared or near-infrared energy into thermal energy. When fusing agent is applied to the powder bed material (e.g. by printing), this temperature boosting capacity can be used to increase the temperature of the treated (e.g. printed) portions of the powder bed material over and above the temperature of the untreated (e.g. unprinted) portions of the powder bed material. The particles of the powder bed material can be at least partially bound or coalesced when the temperature increases to or above the melting point of the polymer.

As used herein, "melting point" refers to the temperature at which a polymer transitions from a crystalline phase to a pliable, amorphous phase. Some polymers do not have a single melting point, but rather have a range of temperatures over which the polymers soften. When the fusing agent is selectively applied to at least a portion of the polymer powder, the fusing agent can heat the treated portion to a temperature at or above the melting or softening point, while the untreated portions of the polymer powder remain below the melting or softening point. This allows the formation of a 3D printed part.

In one example, the fusing agent can have a temperature boosting capacity from about 10°C to about 70°C for a polymer with a melting or softening point of from about 100°C to about 350°C. If the powder bed is at a temperature within about 10°C to about 70°C of the melting or softening point, then such a fusing agent can boost the temperature of the printed powder up to the melting or softening point, while the unprinted powder remains at a lower temperature. In some examples, the powder bed can be preheated to a temperature from about 10°C to about 70°C lower than the melting or softening point of the polymer. The fusing agent can then be applied (e.g. printed) onto the powder and the bed can be irradiated with e.g. infrared or near-infrared light to coalesce the treated (e.g. printed) portion of the powder.

Where a further modifying agent is employed, the fusing agent may be applied to areas of the bed of powder bed material that has or is intended to be treated with the further modifying agent(s). This can allow the further modifying agent to be incorporated in the fused or partially fused portions of powder bed material.

As described above, the fusing agent may be applied to create the porous region in at least part of the structure of the 3D printed object. In some examples, the fusing agent may be applied to create porosity in at least part of the structure of the 3D printed object. In some examples, only part of the structure may be porous. For example, an outer region or shell portion of the structure may be porous. In other examples, the 3D printed object has a porous structure. In yet other examples, the 3D printed object has an internal portion that has a porous structure.

### Powder bed material

The powder bed material (also referred to as "powder bed material") is in the form of particles or powder.

The particles may have an average particle size of at least about 10 µm, for example, at least about 15 µm, at least about 20 µm, at least about 30 µm, at least about 40 µm or at least about 50 µm. The particles may have an average particle size of at most about 120 about, for example, at most about 110 µm, at most about 100 µm, at most about 90 µm, at most about 80 µm or at most about 75 µm.

In some examples, the powder bed material may have an average particle size of from about 10 to about 120 µm, for example, about 15 to about 110 µm. In some examples, the powder bed material may have an average particle size of from about 20 to about 100 µm, about 30 to about 90 µm, about 40 to about 80 µm or about 50 to about 75 µm. As used in the present disclosure, "average" with respect to properties of particles refers to a volume average unless otherwise specified. Accordingly, "average particle size" refers to a volume average particle size. Additionally, "particle size" refers to the diameter of spherical particles, or to the longest dimension of non-spherical particles. Particle size may be determined by any suitable method, for example, by laser diffraction spectroscopy.

In accordance with some examples, the volume-based particle size distribution of the powder bed material can be as follows: D50 can be from about 45 µm to about 75 µm, from about 55 µm to about 65 µm, or about 60 µm; D10 can be from about 20 µm to about 50 µm, from about 30 µm to about 40 µm, or about 35 µm; and D90 can be from about 75 µm to about 100 µm, from about 80 µm to about 95 µm, or about 90 µm. "D50" is defined as the median particle diameter (by volume). "D10" is defined as the tenth-percentile by volume of powder that is below a given particle size, e.g., from about 20 µm to about 50 µm. "D90" is defined as the ninetieth-percentile by volume of powder that is below a given particle size, e.g., about 75 µm to about 100 µm.

In one example, the particle size distribution of the powder bed material is as follows:
a. D50 is from about 45 µm to about 70 µm,
b. D10 is from about 20 µm to about 50 µm, and
c. D90 is from about 75 µm to about 100 µm.

In certain examples, the particles of the powder bed material can have a variety of shapes, such as substantially spherical particles or irregularly-shaped particles. In some examples, the particles can be capable of being formed into 3D printed parts with a resolution of about 10 to about 120 µm, for example about 20 to about 100 µm or about 20 to about 80 µm. As used herein, "resolution" refers to the size of the smallest feature that can be formed on a 3D printed part. The particles can form layers from about 10 to about 120 µm or 100 µm thick, allowing the fused layers of the printed part to have roughly the same thickness. This can provide a resolution in the z-axis direction of about 10 to about 100 µm. The particles can also have a sufficiently small particle size and sufficiently regular particle shape to provide about 10 to about 100 µm resolution along the x-axis and y-axis.

In some examples, the powder bed material comprises a polymer powder, for instance, a thermoplastic polymer powder. The polymer can have a melting or softening point from about 70°C to about 350°C. In further examples, the polymer can have a melting or softening point from about 150°C to about 200°C. A variety of thermoplastic polymers with melting points or softening points in these ranges can be used. For example, the polymer powder can be a polyamide. Suitable polyamides include PA- 6, PA- 9, PA-11, PA-12, PA-66 and PA-612. Other suitable polymer powders include polyethylene powder, wax, thermoplastic polyurethane powder, acrylonitrile, butadiene styrene powder, amorphous polyamide powder, polymethylmethacrylate powder, ethylene-vinyl acetate powder, polyacrylate powder, silicone rubber, polypropylene powder, polyester powder, polycarbonate powder, copolymers of polycarbonate with acrylonitrile butadiene styrene, copolymers of polycarbonate with polyethylene terephthalate polyether ketone powder, polyacrylate powder, polystyrene powder, or mixtures thereof. In an example, the polymer powder can be a polyamide powder, e.g. PA-11 or PA-12. In another example, the polymer powder can be thermoplastic polyurethane.

In some examples, the polymer powder can include a polymer having amino groups. Such amino groups can crosslink with epoxy groups present, for example, if an epoxy-containing modifying agent or epoxy-containing further modifying agent is employed. This crosslinking can result in an increase in stiffness compared to the polymer in un-crosslinked form.

An example of a polymer having amino groups is polyamide. Suitable polyamides include PA- 6, PA- 9, PA-11, PA- 12, PA- 66, and PA- 612. In some examples, polymers that include multiple amino groups can include from about 2 to about 1,000 amino groups per molecule.

In some examples, the polymer powder can be pre-mixed with a separate amine compound or an epoxy compound. If the polymer powder is pre-mixed with an amine compound, an epoxy compound may be used as a modifier in the modifying agent or as a functional component in the further modifying agent. For instance, the epoxy compound can be selectively applied as the modifying agent and/or further modifying agent to crosslink with the amine compound mixed with the polymer powder. This crosslinking reaction can form a crosslinked polymer network that can increase the stiffness of the powder bed material at desired locations within the 3D printed object. Conversely, if the polymer powder is pre-mixed with an epoxy compound, an amine compound may be used a modifier in the modifying agent or as a functional component in the further modifying agent. The amine compound can be selectively applied as the tailoring agent to crosslink with the epoxy compound mixed with the polymer powder. This crosslinking reaction can form a crosslinked polymer network that can increase the stiffness of the powder bed material at desired locations within the 3D printed object. In another alternative, the epoxy compound and amine compound are used as separate agents. One of these agents can be selectively applied to the powder bed material as the further modifying agent, while the other can be applied as the modifying agent that is applied to the 3D printed object. These agents may react to form a crosslinked polymer network that can increase the stiffness of the powder bed material at the selected locations.

In examples where the polymer powder is mixed with an epoxy compound, the polymer powder can be mixed with an epoxy compound selected from at least one of the following: 2-ethylhexyl glycidyl ether, phenol glycidyl ether, p-tert-butylphenyl glycidyl ether, dibromo phenyl glycidyl ether, lauryl alcohol, glycidyl ether, resorcinol diglycidyl ether, neopentyl glycol diglycidyl ether, 1,6-hexanediol diglycidyl ether, glycerol polyglycidyl ether, trimethylolpropane, polyglycidyl ether, pentaerythritol polyglycidyl ether, diglycerol polyglycidyl ether, polyglycerol polyglycidyl ether, sorbitol polyglycidyl ether, diglycidyl terephthalate, diglycidyl o-phthalate, N-glycidyl phthalimide, ethylene glycol diglycidyl ether, polyethylene glycol diglycidyl ether, tris(4-hydroxyphenyl) methane triglycidyl ether, or combinations thereof. In some examples where the polymer powder is mixed with an epoxy compound, the epoxy compound is a compound that is solid at room temperature, for example, about 20 to about 30 degrees C or about 20 to about 25 degrees C.

In examples where the polymer powder is mixed with an amine compound, the polymer powder can be mixed with an amine compound selected from at least one of the following: aniline sulfonamide, tetraethylenepentamine, dipropylenediamine, diethylaminopropylamine, N-aminoethylpiperazine, bis(2-ethylhexyl)amine, methanediamine methylphenyl diamine, methylphenylenediamine, diaminodiphenyl sulfone, diethylenetriamine, triethylenetetramine, or a combination thereof.

When the powder bed material includes polymer powder mixed with an amine compound or an epoxy compound, the amount of amine or epoxy compound can be from about 0.1 wt% to about 10 wt% of the total weight of the powder bed material.

The powder bed material may also include an anti-oxidant. The anti-oxidant can be sterically hindered phenol derivatives. The anti-oxidant can, for example be in the form of fine particles, e.g., 5 µm or less, that are e.g. dry blended with the remaining particles of the powder bed material. The anti-oxidant may be present at a concentration of at least about 0.01 wt %, for example, at least about 0.05 wt %, at least about 0.1 wt % or at least about 0.2 wt %. The anti-oxidant may be present at a concentration of at most about 2 wt %, for example, at most about 1.5 wt % or at most about 1 wt %. In some examples, the anti-oxidant may be present in an amount of e.g., from about 0.01 wt% to about 2 wt% or from about 0.2 wt% to about 1 wt% of the powder bed material.

The powder bed material can, in some cases, also comprise a filler. The filler can include inorganic particles such as alumina, silica, glass, and/or other similar fillers. In some examples, the filler can include a free-flow filler, anti-caking filler, or the like. Such fillers can prevent packing of the powder bed material, and/or coat the particles of the powder bed material and smooth edges to reduce inter-particle friction, and/or absorb moisture. In some examples, a weight ratio of thermoplastic polymer to filler particles in the powder bed material can be from about 99: 1 to about 1 :2, from about 10: 1 to about 1:1, or from about 5:1 to about :1.

### Modifying agent

As mentioned above, the 3D printed object is treated with a modifying agent, such that the modifying agent at least partially penetrates the at least one channel and/or pore of the structure of the 3D printed object. This treatment can occur once the 3D printed object is formed. Accordingly, the modifying agent can be applied as a post-treatment step, for example, to the ready-formed 3D printed object.

In some examples, the 3D printed object may be treated with the modifying agent by dipping, physical or chemical vapor deposition, and/or supercritical fluid deposition. In some examples, the 3D printed object is treated by supercritical carbon dioxide deposition of the modifying agent into the at least one channel and/or pore of the structure of the 3D printed object. A surface, for example, an external or outer surface, of the 3D printed object may be treated, such that the modifying agent penetrates or at least partially penetrates the porous region of the 3D printed object.

In some examples, the modifying agent comprises a modifier that modifies the mechanical and/or chemical properties of the 3D printed object.

The modifier may modify the mechanical and/or chemical properties of the 3D printed object at selected locations at which the modifier is present. In some examples, the modifier itself may cause modification in the mechanical and/or chemical properties of the 3D printed object. Alternatively, the modifier may interact with a functional component of a further modifying agent that is present at selected locations in the 3D printed object to impart the modification in mechanical and/or chemical properties (see below).

In some examples, the modifier may be selected from a fire retarder, a hardener, a filler and/or a plasticizer.

Examples of suitable fire retarders (retardants) include huntite (Mg₃Ca(CO₃)₄), hydromagnesite, aluminium hydroxide and magnesium hydroxide. In some examples, aluminium hydroxide may be used. In some examples, a mixture of huntite and hydromagnesite may be used.

Examples of suitable plasticizers include at least one of the following plasticizers: 2-pyrrolidone, dimethyl sulfoxide, methyl 4-hydroxybenzoate, dioctyl phthalate, N-methyl-2-pyrrolidone, N-2-hydroxyethyl-2-pyrrolidone, urea, ethylene carbonate, propylene carbonate, lactones, diethylene glycol, triethylene glycol, tetraethylene glycol, decalin, gamma-butyrolactone, dimethylformamide, phenylmethanol, dimethyl sulfoxide (DMSO), 2-methyl-benzene sulphonamide, 4-methyl benzene, 2-methyl-benzene sulphonamide, N-butylbenzenesulfonamide, N-ethylbenzenesulfonamide, N-propylbenzenesulfonamide, N-butyl-N-dodecylbenzenesulfonamide, N,N-dimethylbenzenesulfonamide, p-methylbenzenesulfonamide, o/p-toluene sulphonamide, p-toluene sulphonamide, 2-ethylhexyl-4-hydroxybenzoate, hexadecyl-4-hydroxybenzoate, 1-butyl-4-hydroxybenzoate, dioctyl phthalate, diisodecyl phthalate, di(-2-ethylhexyl) adipate, and tri-(2-ethylhexyl) phosphate. An example of a plasticizer combination may be a mixture of 4-methyl benzene and 2-methyl benzene.

Examples of suitable fillers include particles of at least one of the following materials: boron, boron nitride materials, silica, alumina, titanium dioxide, glass, carbon nanomaterials, montmorillonite, talc, basalt, silicon carbide, metal carbide, silicon nitride, metal nitride, polyaramid, metal, metal alloy, diamond, boron carbide, mica, wollastonite, and ceramic.

The filler may comprise particles. Suitable particle sizes range from about 0.01 to about 1 microns, for example, about 0.05 to about 0.8 microns. Nanoparticles may be employed. The fillers may be used to reinforce the mechanical properties of the 3D printed object at selected locations within the object.

In some examples, the modifier may be a hardener. The hardener may be an agent that reacts with material used to form the 3D printed object to harden the material at selected locations. In some examples where a further modifying agent (see below) is employed to incorporate a functional component at selected locations within the 3D printed object, the hardener may react with the functional component to harden the 3D printed object at those selected locations. As such the further modifying agent may "seed" a functional modification to the mechanical and/or chemical properties of the 3D printed object at selected locations.

In some examples, the hardener may be a crosslinking agent.

In some examples, the crosslinking agent may include compounds having a functional group selected from at least one of epoxy, amino (e.g. -NHR, -NR₂ or-NH₂), isocyanate, phosphine and aldehyde. Examples of crosslinking agents having isocyanate, phosphine or aldehyde functional groups include: methyl isocyanate, ethyl isocyanate, toluene isocyanate, hexamethylene diisocyanate, acetaldehyde, glutaraldehyde, or tris(hydroxymethyl)phosphine.

Where the crosslinking agent includes an epoxy functional group (epoxy crosslinking agent), the epoxy crosslinking agent may have one or more epoxy groups. Epoxy groups can be highly reactive with amino groups. Accordingly, when an epoxy compound comes in contact with a compound having an amino functional group, the epoxy compound can react.

In some examples, an epoxy crosslinking agent may be employed as the modifier of the modifying agent when a functional component comprising an amino group (amino crosslinking agent) is present in the further modifying agent. In these examples, the amino crosslinking agent may be selectively applied to the powder bed material. The amino crosslinking agent may react with the epoxy crosslinking agent applied during post-treatment to form regions of relatively high stiffness and/or hardness in the 3D printed object.

In some examples, an amino crosslinking agent may be employed as the modifier of the modifying agent when a functional component comprising an epoxy group (epoxy crosslinking agent) is present in the further modifying agent. In these examples, the epoxy crosslinking agent may be selectively applied to the powder bed material. The epoxy crosslinking agent may react with the amino crosslinking agent applied during post-treatment to form regions of relatively high stiffness and/or hardness in the 3D printed object.

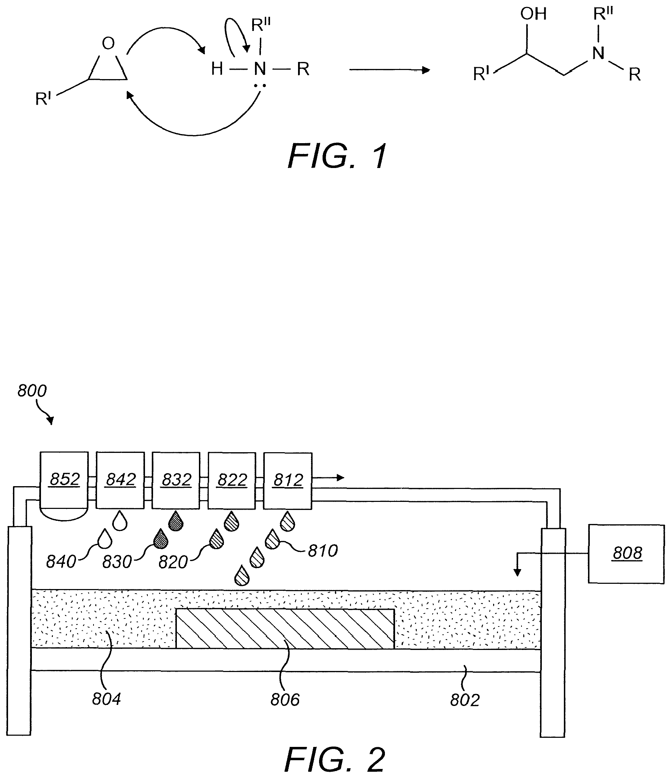

FIG. 1 shows an example reaction mechanism of an epoxy compound reacting with an amine compound. The epoxy compound that can be employed can have multiple epoxide groups so that when the multiple epoxide groups react with amino groups, a cross-linked network may form.

Examples of epoxy crosslinking agents that can be used include 2-ethylhexyl glycidyl ether, phenol glycidyl ether, p-tert-butylphenyl glycidyl ether, dibromo phenyl glycidyl ether, lauryl alcohol glycidyl ether, resorcinol diglycidyl ether, neopentyl glycol diglycidyl ether, 1,6-hexanediol diglycidyl ether, glycerol polyglycidyl ether, trimethylolpropane polyglycidyl ether, pentaerythritol polyglycidyl ether, diglycerol polyglycidyl ether, polyglycerol polyglycidyl ether, sorbitol polyglycidyl ether, diglycidyl terephthalate, diglycidyl o-phthalate, N-glycidyl phthalimide, ethylene glycol diglycidyl ether, polyethylene glycol diglycidyl ether, tris(4-hydroxyphenyl) methane triglycidyl ether, and combinations thereof. In some examples, the epoxy compound can have two epoxide groups. In other examples, the epoxy compound can have three or more epoxide groups. In further examples, a mixture of epoxy compounds can be used. For example, an epoxy compound having exactly two epoxide groups can be used together with an epoxy compound having three or more epoxide groups. In a particular example, the epoxy compound can include a combination of ethyleneglycol diglycidyl ether and triphenylolmethane triglycidyl ether.

Where the modifier comprises a crosslinking agent having an amino functional group (amino crosslinking agent), the amino compound may have one or more amino groups. Such amino compounds may be employed together with a further crosslinking agent having an epoxy group (epoxy crosslinking agent).

In some examples, the crosslinking agent including an amino functional group (amino crosslinking agent) can include aniline sulfonamide, tetraethylenepentamine, dipropylenediamine, diethylaminopropylamine, N-aminoethylpiperazine, bis(2-ethylhexyl)amine, methanediamine methylphenyl diamine, methylphenylenediamine, diaminodiphenyl sulfone, diethylenetriamine, triethylenetetramine, or a combination thereof. In a particular example, the amine compound can be diaminodiphenyl sulfone.

As discussed above, in some examples, the 3D printed object may be treated with the modifying agent by dipping, physical or chemical vapor deposition, and/or supercritical fluid deposition. In some examples, the 3D printed object is treated by supercritical carbon dioxide deposition of the modifying agent into the at least one channel and/or pore of the structure of the 3D printed object. A surface, for example, an external or outer surface, of the 3D printed object may be treated, such that the modifying agent penetrates or at least partially penetrates the porous region of the 3D printed object.

For example, where the modifying agent is applied by dipping, the 3D printed object may be submerged into a liquid containing the modifying agent. The modifying agent may be dispersed or dissolved in the liquid. The liquid may penetrate the porous region of the 3D printed object, thereby drawing the modifying agent into the void volume of the porous region. Thus treated, the 3D printed object may be dried to remove the liquid, leaving the modifying agent in the porous region.

In some examples, the modifying agent may be incorporated into the porous region of the 3D printed object by supercritical fluid deposition. In some examples, supercritical CO₂ fluid deposition may be used. The supercritical fluid (e.g. CO₂) may draw the modifying agent into the porous region of the 3D printed object. For example, the modifying agent may be applied to an outer surface of the 3D printed object and the supercritical fluid (e.g. CO₂) then brought into contact with the 3D printed object to draw the modifying agent into the porous region. Alternatively or additionally, the modifying agent may be dispersed or dissolved in the supercritical fluid (e.g. CO₂) and the resulting mixture may permeate the porous region to deposit the modifying agent therein.

In some examples, the 3D printed object may be placed in a reactor. The reactor may be kept at a low temperature, for example, at a temperature at which the supercritical fluid is a liquid. The supercritical fluid (e.g. CO₂) may then be introduced into the reactor, and the reactor may then be heated and pressurized to affect permeation of the supercritical fluid (e.g. CO₂) into the porous region of the 3D printed object. In some examples, the modifying agent may be placed in the reactor, such that the modifying agent dissolves in the supercritical fluid (e.g. CO₂) under the reaction conditions. The modifying agent may be placed in the reactor in admixture with a solvent. The solvent may aid dissolution of the modifying agent in the supercritical fluid (e.g. CO₂).

When the modifying agent dissolves in the supercritical fluid (e.g. CO₂), the resulting solution can permeate the porous region of the 3D printed object. Alternatively, the modifying agent may be applied to an outer surface of the 3D printed object e.g. if the porous region is exposed to the outer surface. Accordingly, as the supercritical fluid (e.g. CO₂) permeates the porous region, the modifying agent is drawn into the void(s) within the porous region.

After a desired length of time, the reactor may be cooled and depressurized. The resulting 3D printed object can comprise modifying agent within the porous region.

### Further modifying agent

As mentioned above, the method may further comprise applying a further modifying agent comprising a functional component to at least a portion of the powder bed material, such that the functional component of the further modifying agent is incorporated in the porous region of the 3D printed object. The further modifying agent may be applied by selectively applying (e.g. by jetting) the further modifying agent onto at least a portion of the powder bed material, such that the functional component of the further modifying agent is incorporated in the porous region. Accordingly, the further modifying agent may be applied as the 3D printed object is manufactured layer-by-layer.

By controlling the selective application of the further modifying agent, it may be possible to control e.g. the location and amount of the further modifying agent at the voxel-level. The further modifying agent may be selected to interact with the modifying agent that is used to treat the 3D printed object. For example, the further modifying agent may be selected to selectively bind the modifying agent. The further modifying agent may alter the surface properties (e.g. the hydrophilicity) of at least part of the walls of the channel(s) and/or pore(s) to facilitate location and/or retention of the modifier of the modifying agent within the channel(s) and/or pore(s). In some examples, therefore, the further modifying agent may be used to help locate the subsequently applied modifying agent at selected locations within the 3D printed object. In other examples, the further modifying agent may be selected to react with the modifying agent. These interactions may allow material properties of the 3D printed object to be modified at predetermined locations.

In some examples, when the 3D printed object is treated with the modifying agent, the modifying agent may at least partially penetrate the at least one channel and/or pore of the structure of the 3D printed object and interact with the functional component of the further modifying agent. In some examples, the modifying agent comprises a modifier that at least partially penetrates the at least one channel and/or pore of the structure of the 3D printed object and reacts with the functional component of the further modifying agent.

In some examples, the functional component of the further modifying agent may comprise a crosslinking agent. The crosslinking agent may include an epoxy or amine group. When the modifier of the modifying agent comprises the other of an epoxy or amine group, a crosslinking reaction may be carried out once the modifying agent is applied to the 3D printed object in a post-treatment step to alter the mechanical properties (e.g. increase stiffness and/or hardness) at selected locations within the object.

In some examples, the functional component of the further modifying agent may comprise an epoxy group and the modifier of the modifying agent may comprise an amine group. Alternatively, the functional component of the further modifying agent may comprise an amine group and the modifier of the modifying agent may comprise an epoxy group.

Examples of epoxy crosslinking agents that can be used include 2-ethylhexyl glycidyl ether, phenol glycidyl ether, p-tert-butylphenyl glycidyl ether, dibromo phenyl glycidyl ether, lauryl alcohol glycidyl ether, resorcinol diglycidyl ether, neopentyl glycol diglycidyl ether, 1,6-hexanediol diglycidyl ether, glycerol polyglycidyl ether, trimethylolpropane polyglycidyl ether, pentaerythritol polyglycidyl ether, diglycerol polyglycidyl ether, polyglycerol polyglycidyl ether, sorbitol polyglycidyl ether, diglycidyl terephthalate, diglycidyl o-phthalate, N-glycidyl phthalimide, ethylene glycol diglycidyl ether, polyethylene glycol diglycidyl ether, tris(4-hydroxyphenyl) methane triglycidyl ether, and combinations thereof. In some examples, the epoxy compound can have two epoxide groups. In other examples, the epoxy compound can have three or more epoxide groups. In further examples, a mixture of epoxy compounds can be used. For example, an epoxy compound having exactly two epoxide groups can be used together with an epoxy compound having three or more epoxide groups. In a particular example, the epoxy compound can include a combination of ethyleneglycol diglycidyl ether and triphenylolmethane triglycidyl ether.

Where the functional component of the further modifying agent comprises a crosslinking agent having an amino functional group (amino crosslinking agent or amino compound), the amino compound may have one or more amino groups. Such amino compounds may be employed together with a modifier that is a crosslinking agent comprising an epoxy group (epoxy crosslinking agent).

In some examples, the crosslinking agent including an amino functional group (amino crosslinking agent) can include aniline sulfonamide, tetraethylenepentamine, dipropylenediamine, diethylaminopropylamine, N-aminoethylpiperazine, bis(2-ethylhexyl)amine, methanediamine methylphenyl diamine, methylphenylenediamine, diaminodiphenyl sulfone, diethylenetriamine, triethylenetetramine, or a combination thereof. In a particular example, the amine compound can be diaminodiphenyl sulfone.

The further modifying agent may be a jettable agent. The functional component may be dispersed or dissolved in a liquid carrier. The functional component may be present in the further modifying agent in an amount of at least about 0.5 weight %, for example, at least about 1 weight % or at least about 2 weight %. In some examples, the functional component may be present in the further modifying agent in an amount of at most about 70 weight %, at least about 60 weight %, or at least about 50 weight %. In some examples, the functional component may be present in the further modifying agent in an amount of about 0.5 weight % to about 70 weight %, about 1 weight % to about 60 weight % or about 2 weight % to about 50 weight %. In some examples, the functional component may be present in the further functional agent in an amount of about 5 weight % to about 45 weight %, about 10 weight % to about 40 weight % or about 15 weight % to about 30 weight %.

Where the functional component is an amino crosslinking agent in an amount from about 5 wt% to about 30 wt%, or from about 10 wt% to about 20 wt%.

Where the functional component is an epoxy crosslinking agent in an amount from about 5 wt% to about 30 wt%, or from about 10 wt% to about 20 wt%.

The liquid carrier of the further modifying agent may be water. The liquid carrier (e.g. water) may be present in an amount of from about 10 to about 95 weight %, for example, from about 10 to about 70 weight %, about 15 to about 60 weight %, about 20 to about 50 weight %, or from about 25 to about 45 weight %.

The further modifying agent may also include at least one of the following additives: surfactant(s), antimicrobial agent(s), anti-kogation agent(s), chelating agent(s), and humectant(s)

Suitable humectants include diethylene glycol butyl ether, polyethylene glycol, 2-pyrrolidone, N-methyl 2-pyrrolidone, hydroxyethyl 2-pyrrolidone, and combinations thereof. The humectant may be present in an amount of about 20 to about 60 weight %, about 30 to about 50 weight % or about 35 to about 45 weight %.

A surfactant, or combination of surfactants, can also be present in the reinforcing agent. Examples of surfactants include alkyl polyethylene oxides, alkyl phenyl polyethylene oxides, polyethylene oxide block copolymers, acetylenic polyethylene oxides, polyethylene oxide (di)esters, polyethylene oxide amines, protonated polyethylene oxide amines, protonated polyethylene oxide amides, dimethicone copolyols, substituted amine oxides, and the like. Other surfactants can include liponic esters such as Tergitol™ 15-S-12, Tergitol™ 15-S-7 available from Dow Chemical Company, LEG-1 and LEG-7; Triton™ X-100; Triton™ X-405 available from Dow Chemical Company; and sodium dodecylsulfate.

The amount of surfactant in the reinforcing agent may range from about 0.01 wt% to about 20 wt%.

Various other additives can be employed to optimize the properties of the further modifying agent. Such additives can be present in amounts of from about 0.01 wt% to about 20 wt% of the reinforcing agent. Examples of these additives are those added to inhibit the growth of harmful microorganisms. These additives may be biocides, fungicides, and other microbial agents, which can be used in ink jet formulations. Examples of suitable microbial agents include NUOSEPT® (Nudex, Inc.), UCARCIDE™ (Union carbide Corp.), VANCIDE® (R.T. Vanderbilt Co.), PROXEL® (ICI America), and combinations thereof.

Sequestering agents, such as EDTA (ethylene diamine tetra acetic acid), may be included to eliminate the deleterious effects of heavy metal impurities. Buffers may also be used to control the pH of the composition. Viscosity modifiers may also be present.

In some examples, the functional component of the further modifying agent may be present in the fusing agent. Accordingly, the fusing agent may comprise the functional component and a radiation absorber. In such examples, the fusing agent may perform the function of the fusing agent and the further modifying agent.

In some examples, the functional component of the further modifying agent may be present in the detailing agent. In such examples, the fusing agent may perform the function of the detailing agent and the further modifying agent.

### Detailing Agents

In some examples, a detailing agent may be used. The detailing agent can be capable of reducing the temperature of the powder bed material onto which the detailing agent is applied. The detailing agent can increase selectivity between the fused and unfused or partially unfused portions of the powder bed by reducing the temperature of the powder around the edges of the portion to be fused. Thus, the detailing agent can be used to create porosity within the 3D printed object. For example, the detailing agent may be applied to selected regions to which fusing agent has been applied to reduce the extent of fusing in the detailing agent-treated regions. By reducing the extent of fusing, porosity may be introduced into the 3D printed part. In some examples, the fusing agent and detailing agent may be selectively applied in combination to provide the porous region.

In some examples, the detailing compound can be a solvent that evaporates at the temperature of the powder bed. In some cases the powder bed can be preheated to a preheat temperature within about 10 °C to about 70 °C of the fusing temperature of the polymer powder. Depending on the type of polymer powder used, the preheat temperature can be in the range of about 90 °C to about 200 °C or more. The detailing compound can be a solvent that evaporates when it comes into contact with the powder bed at the preheat temperature, thereby cooling the printed portion of the powder bed through evaporative cooling. In certain examples, the detailing agent can include water, co-solvents, or combinations thereof.

Non-limiting examples of co-solvents for use in the detailing agent can include xylene, methyl isobutyl ketone, 3-methoxy-3-methyl-1-butyl acetate, ethyl acetate, butyl acetate, propylene glycol monomethyl ether, ethylene glycol mono tert-butyl ether, dipropylene glycol methyl ether, diethylene glycol butyl ether, ethylene glycol monobutyl ether, 3-Methoxy-3-Methyl-1-butanol, isobutyl alcohol, 1,4-butanediol, N,N-dimethyl acetamide, and combinations thereof.

In some examples, the detailing agent can be mostly water. In a particular example, the detailing agent can be about 85 wt% water or more. In further examples, the detailing agent can be about 95 wt% water or more. In still further examples, the detailing agent can be substantially devoid of radiation absorbers. That is, in some examples, the detailing agent can be substantially devoid of ingredients that absorb enough radiation energy to cause the powder to fuse. In certain examples, the detailing agent can include colorants such as dyes or pigments, but in small enough amounts that the colorants do not cause the powder printed with the detailing agent to fuse when exposed to the radiation energy.

The detailing agent can also include ingredients to allow the detailing agent to be jetted by a fluid jet printhead. In some examples, the detailing agent can include additives such as those in the fusing agent described above. These ingredients can include a liquid vehicle, surfactant, dispersant, co-solvent, biocides, viscosity modifiers, materials for pH adjustment, sequestering agents, preservatives, and so on. These ingredients can be included in any of the amounts described above.

### 3D Printing

FIGS. 2-4 illustrate one example method of making a 3D printed object. FIG. 2 shows a 3D printing system 800 that includes a build platform 802 supporting powder bed material 804. A partially printed object 806 is made up of fused powder bed material in the powder bed. This figure shows a cross-sectional view of the partially printed article and the powder bed. A layer of fresh powder bed material is supplied over the top of the partially printed object from a powder bed material supply 808. Fluids (e.g. inkjet inks) are applied to the layer of fresh powder bed material, including fusing agent 810 from fusing agent jets 812, 840, 842, an epoxy crosslinking agent 820 from a first reactive agent jet 822. The fluid jets are moveable within the printing system so that the fluid jets can move across the powder bed to apply the fluids in specific, desired locations. The system also includes an electromagnetic energy source 852.

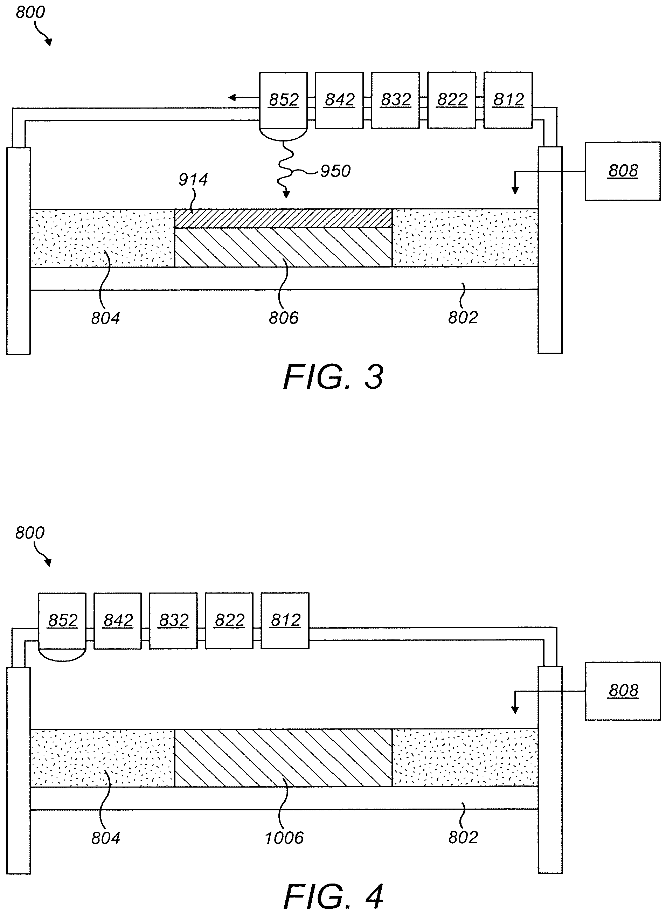

FIG. 3 shows the 3D printing system 800 after the fluids have been jetted onto portions of the powder bed material 804. An upper layer of build material includes areas jetted with fusing agent 810 and epoxy crosslinking agent 820. These agents are selectively applied to produce an architecture or structure that, for example, comprises pores in which the epoxy crosslinking agent is present in the pores. As explained above, the porosity can be produced by controlling the amount and print density of the fusing agent to control the degree of fusing of the powder bed particles in the porous region.

FIG.4 shows the 3D printing system 800 after fusing the upper layer to form a 3D printed object 1006. Fusing can be carried out by exposing the powder bed to electromagnetic energy 950 from an energy source 852, such as an infrared lamp. Once fused, the object 1006 can be removed from the powder bed.

Suitable fusing lamps for use in the 3D printing system can include commercially available infrared lamps and halogen lamps. The fusing lamp can be a stationary lamp or a moving lamp. For example, the lamp can be mounted on a track to move horizontally across the powder bed. Such a fusing lamp can make multiple passes over the bed depending on the amount of exposure used to fuse individually printed layer. The fusing lamp can be configured to irradiate the entire powder bed with a substantially uniform amount of energy. This can selectively fuse the portions printed with the fusing agent while leaving the unprinted portions of the polymer powder below the fusing temperature. The extent of fusing may also be controlled by controlling the amount and print density of fusing agent and/or selectively cooling portions of the bed that have been treated with fusing agent using a detailing agent. By controlling the extent of fusing, complete fusing or solidification of the powder bed particles can be avoided in selected parts, thereby providing porosity in selected regions of the 3D printed object.

In one example, the fusing lamp can be matched with the radiation absorber in the fusing agent so that the source emits wavelengths of light that match the peak absorption wavelengths of the radiation absorber. A radiation absorber with a narrow peak at a particular near-infrared wavelength can be used with an electromagnetic radiation fusing source that emits a narrow range of wavelengths at approximately the peak wavelength of the fusing agent. Similarly, a radiation absorber that absorbs a broad range of near-infrared wavelengths can be used with an electromagnetic radiation fusing source that emits a broad range of wavelengths. Matching the radiation absorber and the electromagnetic radiation fusing source in this way can increase the efficiency of fusing the polymer particles with the fusing agent printed thereon, while the unprinted polymer particles do not absorb as much light and remain at a lower temperature.

In some examples, the three-dimensional printing system can also include preheaters for preheating the polymer powder to a temperature near the fusing temperature. In one example, the system can include a print bed heater to heat the print bed during printing. The preheat temperature used can depend on the type of polymer used. In some examples, the print bed heater can heat the print bed to a temperature from about 50 °C to about 250 °C. The system can also include a supply bed, where polymer particles can be stored before being spread in a layer onto the print bed. The supply bed can have a supply bed heater. In some examples, the supply bed heater can heat the supply bed to a temperature from about 80 °C to about 140 °C.

Depending on the amount of radiation absorber present in the polymer powder, the absorbance of the radiation absorber, the preheat temperature, and the fusing temperature of the polymer, an appropriate amount of irradiation can be supplied from the electromagnetic energy source or fusing lamp. In some examples, the fusing lamp can irradiate individual layers from about 0.1 to about 10 seconds per pass. In further examples, the fusing lamp can move across the powder bed at a rate of about 2.5 cm per second to about 130 cm per second to fuse the individual layers. In still further examples, the fusing lamp can move across the powder bed at a rate of about 15 cm per second to about 50 cm per second.

In various examples, the fusing agent 810, and epoxy crosslinking agent 820 can be applied to the powder bed material in any order.

In one example, the fusing agent 810 and epoxy crosslinking agent can be applied to the powder bed material before irradiating the powder bed material 804. In another example, the fusing agent 810 can be applied to the powder bed material first. The powder bed material 804 can then be irradiated to soften the polymer particles that were printed with the fusing agent. After softening the polymer particles, the epoxy crosslinking agent 820 can be applied.

Once the printing process is complete and the 3D object formed, it can be removed and cleaned, for example, by jet-blasting or sand-blasting.

The 3D printed object may then be treated with a modifying agent such that the modifying agent at least partially penetrates the network of pore(s) and/or channel(s) of the 3D printed object (not shown). The modifying agent may comprise a modifier that is an amino compound. Accordingly, when the modifying agent penetrates the network of pore(s) and/or channel(s) of the 3D printed object (not shown), it comes into contact with the epoxy crosslinking agent present in the pore(s). The 3D printed object may be treated, for example, by heating to crosslink the epoxy and amino compounds, such that a hardening reaction takes place. This allows selected regions of the 3D printed object to be hardened by a post-treatment step.

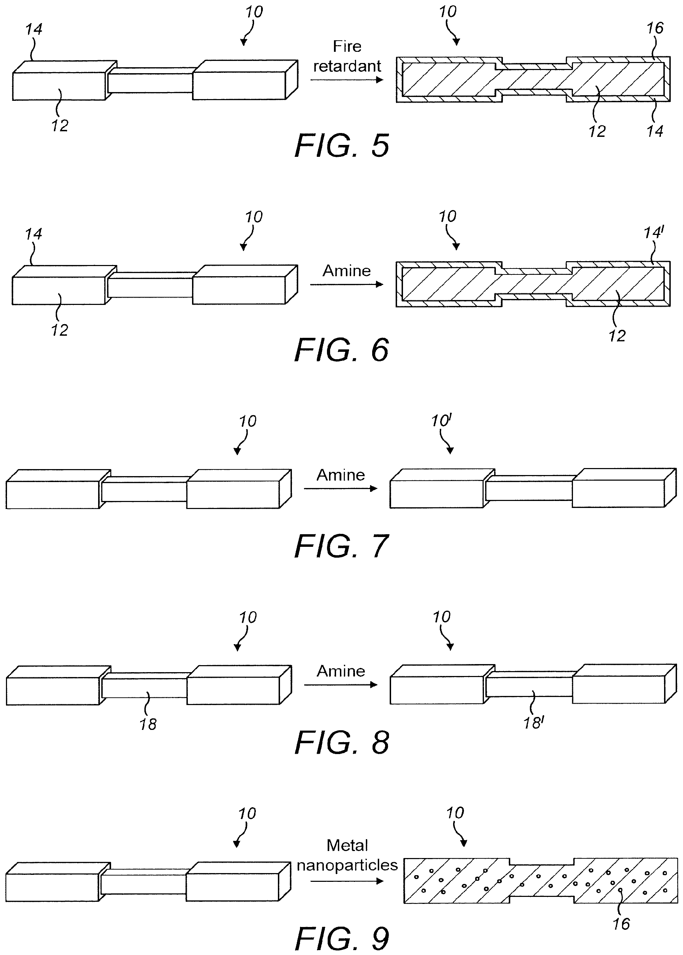

FIGS. 5 to 9 are schematic drawings that show examples of 3D printed objects that can be printed using examples of the methods of the present disclosure. FIG. 5 depicts a 3D printed object 10. A fusing agent is selectively applied during the 3D printing process, such that the object comprises a solid core 12 and a porous shell 14. The shell 14 comprises e.g. a network of interconnected pores. The object 10 is treated (post-treatment) with a modifying agent comprising a flame retardant 16 as a modifier. The flame retardant 16 can be transported into the pores of the shell by supercritical carbon dioxide deposition. The flame retardant particles 16 are thus localized within the pores of the shell 14.

In FIG. 6, a fusing agent and further modifying agent comprising an epoxy compound as a functional component are selectively applied during the 3D printing process, such that the object comprises a solid core 12 and a porous shell 14. The shell 14 comprises e.g. a network of interconnected pores. The epoxy compound is incorporated in or on the walls of the pores. The object 10 is treated (post-treatment) with a modifying agent comprising an amine compound as a modifier. The amine compound can be transported into the pores of the shell by supercritical carbon dioxide deposition. The amine compounds interact with the epoxy compounds in the pores/pore walls and a crosslinking reaction occurs when the object 10 is exposed to elevated temperatures. The crosslinking reaction increases the hardness and/or stiffness of the shell 14 to form a stiffened/hardened shell 14'. The selective application of the epoxy compound "seeds" the subsequent crosslinking or hardening reaction.

FIG. 7 is similar to FIG. 6 except that the entire structure of object 10 is porous and the epoxy compound is fully loaded within the structure. Thus, an object 10' having an increased hardness/stiffness can be formed.

FIG. 8 is similar to FIG. 6 except that, instead of a porous shell 14, the object 10 is printed with a porous mid-portion 18 and the epoxy compound is loaded within the mid-portion 18. Thus an object having a stiffened/hardened mid-portion 18' may be formed.

In FIG. 9, a fusing agent is selectively applied during the 3D printing process, such that porosity is introduced throughout the structure of the object 10. The porosity is provided by a network of interconnected pores. The object 10 is treated (post-treatment) with a modifying agent comprising a metal nanoparticles 16 (reinforcing filler) as a modifier. The nanoparticles 16 can be transported into the pores of the shell by supercritical carbon dioxide deposition. The nanoparticles 16 are thus localized within the pores of the object 10.

### Definitions

It is noted that, as used in this specification and the appended claims, the singular forms "a," "an," and "the" include plural referents unless the content clearly dictates otherwise.

As used herein, the term "about" is used to provide flexibility to a range endpoint by providing that a given value may be "a little above" or "a little below" the endpoint. The degree of flexibility of this term can be dictated by the particular variable and can be determined based on experience and the associated description herein.

As used herein, a plurality of items, structural elements, compositional elements, and/or materials may be presented in a common list for convenience. However, these lists should be construed as though each individual member of the list is individually identified as a separate and unique member. Thus, no individual member of such list should be construed as a *de facto* equivalent of any other member of the same list solely based on their presentation in a common group without indications to the contrary.

Concentrations, dimensions, amounts, and other numerical data may be presented herein in a range format. It is to be understood that such range format is used merely for convenience and brevity and should be interpreted flexibly to include the numerical values explicitly recited as the limits of the range, and also to include all the individual numerical values or sub-ranges encompassed within that range as if the numerical value and sub-range is recited. For example, a weight ratio range of about 1 wt% to about 20 wt% should be interpreted to include the explicitly recited limits of 1 wt% and about 20 wt%, and also to include individual weights such as 2 wt%, 11 wt%, 14 wt%, and sub-ranges such as 10 wt% to 20 wt%, 5 wt% to 15 wt%, etc.

As a further note, in the present disclosure, it is noted that when discussing the fluids, materials, and methods described herein, these discussions can be considered applicable to the various examples, whether or not they are explicitly discussed in the context of that example. Thus, for example, in discussing details about the methods of making 3D printed objects, such discussion also refers to the 3D printing kits, and *vice versa.*

Where selective jetting of an agent is performed based on a 3D object model, the 3D object model may comprise at least one of: a 3D object model created using Computer Aided Design (CAD) or similar software; or a file, for example , a Standard Tessellation Language file generated based on output of the CAD software, providing one or more processors of a 3D printer with instructions to form the 3D object

### EXAMPLES

### Example 1

A 3D printed object having a porous structure was dried at 105 degrees C overnight. After drying, the object weighed 1.16 g. The object was formed of PA-12.

The object was placed in a supercritical fluid reactor. A beaker containing 10ml glycidyl methacrylate, 2ml triethylamine and 20ml acetone was placed in the bottom of the reactor. The reactor was cooled at ambient pressure to a temperature of less than 5 degrees C.

Carbon dioxide was introduced into the reactor until the pressure reached 50 bar. The reactor was then heated to 50 degrees C and the pressure adjusted to 100 bar. The temperature was then fixed at 140 degrees C. The reactor temperature was raised from 48 degrees C to 140 degrees C, and from 100 bar to 300 bar over a period of 1 hour. After 6 hours at 140 degrees C and 300 bar, the reactor was depressurized to 70 bar in 10 minutes and from 7 bar to atmospheric pressure in 5 minutes.

The object turned a brown colour as a result of the treatment. When the object was dried overnight at 105 degrees C and weighed, its mass was found to be 1.23g, an increase of about 6%.

Photographs of cross-sectional views of the object showed brown traces penetrating pores within the object's structure.

### Example 2

In this example, samples were printed using an HP Jet Fusion ® test bed. The samples were printed with a porous structure of varying densities from 1.023 to 0.877 g/cm³. Porosity was introduced by selectively applying fusing agent onto a portion of powder bed material. The fusing agent was applied to layers of powder bed in controlled amounts and at print density to control the extent of fusing during printing and provide a porous region in the 3D printed object.

The samples were then treated with a purple modifying agent. The modifying agent was introduced into the pores of the 3D printed object using a supercritical (CO₂) fluid using a method similar to that described in Example 1 above. Instead of a beaker containing 10ml glycidyl methacrylate, 2ml triethylamine and 20ml acetone, a beaker containing the modifying agent and a solvent as employed.

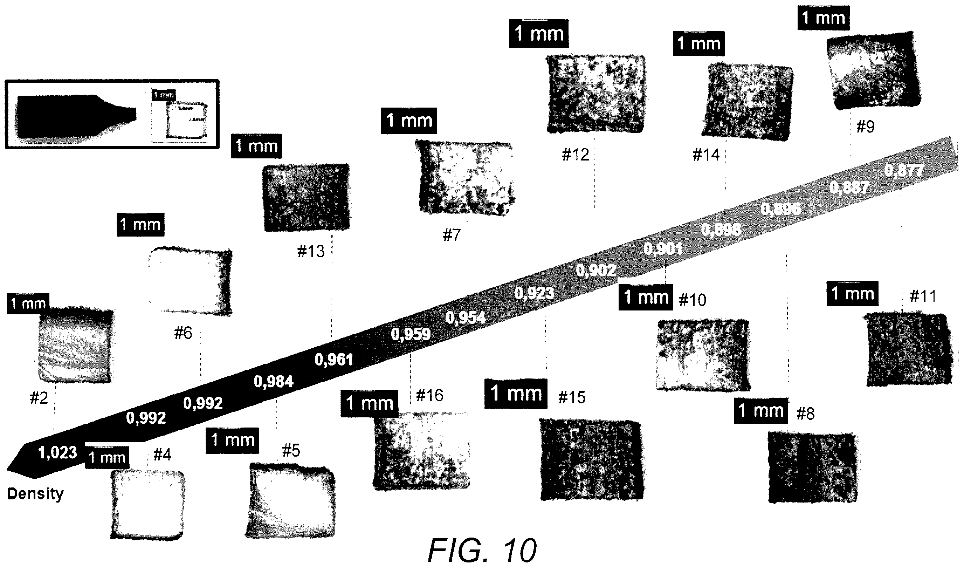

Figure 10 shows photographs of cross-sections of the samples. It can be seen that, with the densest samples with low porosity, penetration of the modifying agent into the core of the sample was relatively poor, and most of the modifying agent remained at the surface of the sample. However, as the density decreased (and porosity increased), penetration improved. The photographs show that relatively good penetration into the core of the sample was obtained at densities at 0.961 g/cm³ and lower. The results show that the porosity of the sample can be controlled to vary the location and concentration of modifying agent within the sample.

## Claims

1. A method of manufacturing a 3D printed object, said method comprising:
selectively applying a fusing agent onto powder bed material;
exposing at least part of the powder bed material to radiation to fuse at least part of the powder bed material to form a layer of the 3D printed object; wherein the fusing agent and/or a detailing agent is selectively applied to the powder bed material in a predetermined arrangement to form a porous region in the 3D printed object; and
treating the 3D printed object with a modifying agent, such that the modifying agent at least partially permeates the porous region of the 3D printed object.

2. The method of claim 1, wherein the porous region comprises pores formed from interstices between partially fused and/or unfused particles of powder bed material.

3. The method of claim 2, wherein the amount of fusing agent and/or a detailing agent that is selectively applied to the powder bed material is controlled to determine the extent of fusing of the powder bed material that forms the porous region.

4. The method of claim 1, wherein the fusing agent and/or a detailing agent is selectively applied to the powder bed material to provide a porosity gradient across the porous region.

5. The method of claim 2, wherein the porous region has a pore volume of about 4 to about 30% by volume.

6. The method of claim 1, which further comprises applying a further modifying agent comprising a functional component to at least a portion of the powder bed material, such that the functional component of the further modifying agent is incorporated in the porous region.

7. The method of claim 6, wherein, when the 3D printed object is treated with the modifying agent, the modifying agent at least partially penetrates the porous region and interacts with the functional component of the further modifying agent.

8. The method of claim 6, wherein the functional component of the further modifying agent comprises an epoxy or amine group, and wherein the modifier of the modifying agent comprises the other of an epoxy or amine group.

9. The method of claim 1, wherein the modifying agent comprises a modifier that modifies the mechanical and/or chemical properties of the powder bed.

10. The method of claim 9, wherein the modifier is selected from a fire retarder, a hardener, a filler and/or a plasticizer.

11. The method of claim 1, wherein the 3D printed object is treated with the modifying agent by dipping, physical or chemical vapor deposition, and/or supercritical fluid deposition.

12. The method of claim 11, wherein the 3D printed object is treated by supercritical carbon dioxide deposition of the modifying agent into the porous region of the 3D printed object.

13. The method of claim 11, which comprises applying a further modifying agent comprising a functional component to at least a portion of the powder bed material, such that the functional component of the further modifying agent is incorporated in the porous region of the 3D printed object, and treating the 3D printed object by supercritical carbon dioxide deposition to cause the modifying agent to at least partially penetrate the porous region and interact with the functional component of the further modifying agent.

14. The method of claim 1, wherein at least part of the porous region is exposed to a surface of the 3D printed object that is treated with the modifying agent.

15. The method of claim 1, wherein the porous region extends from an outer portion to an interior portion of the 3D printed object.
